# EUROPEAN PATENT APPLICATION

(11) **EP 1 241 607 A2**
(43) Date of publication of application: **18.09.2002**
(21) Application number: 01600024.2
(22) Date of filing: 13.11.2001
(51) Int. Cl.: G06F 17/60

(54) **System of promoting selected products**

(30) Priority: 13.03.2001 GR 2001100122
(71) Applicant: Kyriakoulis, G. Paganis, 19013 Anavyssos (GR)
(72) Inventor: Kyriakoulis, G. Paganis, 19013 Anavyssos (GR)

(57) **Abstract**

The invention refers to a system of promoting selected products at the time and point of purchase, by projecting advertising messages and printing material (for example discount coupons, etc.), in commercial sites (stores, shopping centers, etc.) through the use of a network of a satellite site, satellite dishes (or modems), computers, screens and printer(s), where all the programming is done at a central location away from the remote units-receivers. The purpose of the system is to promote products at the most opportune time, the time when the consumer decides on the purchase of the product.

## Description

The invention refers to a system which enables the user to promote selected product(s) at the time and point of purchase by projecting advertising message(s) and issuing accompanying printed material (for example, product leaflets, discount coupons, etc.), all controlled by a pre-determined "script", within commercial sites (such as super markets, pharmacies, variety stores or shopping centers, etc.) through the use of a computer network which includes a satellite site, satellite antennas, screens or TV sets and printers, where the "script" and necessary programming are prepared at a central location, away from the remotes where the message(s) are projected. It also refers to a system where the transfer of the promotional messages, scripts, instructions, etc. is accomplished by the use of wired or wireless modems creating a communication network and achieving the same objective(s) as that of the satellite site and antennas.

Purpose of the system, unlike other advertising media or systems, is to promote selected product(s) at the most opportune time and place, at the time and place when the consumer is making the buying decision, so that the consumer while seeing the actual product on the shelf of the store, is also watching / listening to the promotional messages for the same product on an adjacent screen.

The media used to promote products by using advertising messages are well known. Those better known are the television, the radio, national press, local press and other.

All of the above media, however, present many problems or have flaws some of which are discussed below:
- Television advertising:
   Costs too much;
   Targeting the desired group, as compared to the total viewing public, is a difficult, time consuming and expensive process;
   The choice of the proper time of projecting the message(s) is a product of time consuming studies;
   The viewer - consumer easily forgets the advertised product when the message has ended and has left the TV screen.
- Radio advertising:
   Also costs too much;
   It is difficult to pinpoint the right audience throughout the day;
   The choice of the proper time of projecting the message(s) is a product of time consuming studies;
   The "audible" advertisement, not accompanied by a picture, is substantially less productive and is easily forgotten when the message is finished.
- Advertising in the press:
   Also has a relatively high cost;
   Has a very short life, as long as the reader holds the paper or magazine page open where the advert is appearing;
   It is easily forgotten once the reader is through with the paper/magazine.

Besides the high cost of using the traditional media, the common weakness of these media and almost all other media used to-date is the fact that the promotion is done at the wrong time and the wrong place. Easily forgotten promotional messages or messages which are not even being seen or heard by the prospective buyer, means money lost for the advertiser!

Research done to determine the effectiveness of advertising messages for super market products reveals that, from the well known media, the consumer is best informed by:

| | |
|---|---|
| ○ Local press* | 79% |
| ○ Daily press | 9% |
| ○ Television | 8% |
| ○ Radio | 1% |
| ○ Don't know | 3% |

| | |
|---|---|
| * includes brochures and free local press | |

In analyzing these results, one concludes that the "effectiveness" of the local press and brochures is, most likely, due to the relatively short time between exposure to the material and the visit to the store.

The ineffectiveness of the known advertising media has given rise to the 'demonstration" industry within commercial sites where a live person undertakes to "promote" the product, by "giving life" to the promotional effort as well as linking the promotional effort with the product on the shelf. However, this "industry" has its own problems least of which are the expenses involved as well as the inability of the promoter (advertising agency, supplier, etc.) to deliver the desired message as envisioned and desired and not as "interpreted" by the person at the site doing the actual delivery of the message.

The major advantages of the invention, the system of promoting products by projecting messages for selected products in commercial sites at the time and point of purchase, are:
- The product being promoted on the screen or TV set is easily identified on the shelf of the store by the consumer, as the two are adjacent to each other. This ability of the consumer to "touch" the product while seeing and listening to the promotional message, which usually points out the advantages it offers over competitive products, differentiates the product from all competing ones at the most critical time, the moment the consumer makes the purchasing decision.
- It is an effective form of promoting the product, because the projection of the message and resulting product promotion is done at the exact time and place the consumer is deciding the purchase;
- It promotes the product precisely as it is programmed and as intended by the advertiser (supplier), while the human factor in this effort is limited to the production, as all other methods are, of the message and not its delivery;
- It functions as a "local" advertising system, since it projects the messages in the commercial site and is directed to the specific consumers who are there;
- It does not replace the advertising agency, rather, it cooperates with the agency in the promotion of each selected product by projecting messages produced by the agency and helps it achieve one of its purposes, i.e., increase the sales of the advertised product;
- It is reasonable in cost (often less than a brochure) and the resulting increase in sales is many times the cost;
- The messages can be projected within an hour from their delivery to the central offices by the advertiser, provided they are in digital form; Those not in digital form, require programming for conversion and are usually ready for projection within two hours;
- Changes in messages and / or their content is accomplished quickly and efficiently;
- The promotion of each selected product is done in frequent and repeated time frames ( for example every 10 minutes or less, etc.), projecting the desired message for each product, in accordance with the desires of the advertiser, during the entire time the commercial site (store, shopping center, etc.) is open;
- The promotion material for the product can be viewed by all the visitors of the store or shopping center and most certainly by those who are interested in purchasing the product or a competing one, due to the proximity of the product to the screen on which the message is being shown, since the messages are being projected in the same areas the actual products are located;
- At the same time the product is promoted and its message is on the screen, the consumer sees on the shelf the product itself. Unlike all forms of other advertising, the product cannot be forgotten, since there is practically no lapse of time between the projection of the message and the decision to purchase by the consumer;
- The system allows for immediate issuance of accompanying printed material (such as leaflets, discount coupons, etc..) which further promote the sale of the product while at the same time assist in controlling stock;
- With the capability to issue coupons, there is no longer need to change packaging of products in order to reflect changes such as a discount. The change can be announced to the consumers immediately after the decision is made, with picture and sound. Most important, the "old" product, that is on the shelf at the time the decision is made to offer the discount, is not sidelined by the discounted product, as the issued discount coupons could apply without consideration as to the date of manufacture.
- Finally any difficulties in the system are repaired by mobile repair crews.

### THE INVENTION

The system invented is used to promote selected products at the time and point of purchase by projecting promotional voice and/or multimedia messages and printing material, on demand, in commercial sites (shopping centers, stores, etc.) through a network of computers, satellite storage facilities, satellite antennas (or modems), screens (with built-in or independent speakers) or TVs and printers at the point in time and place the consumer is making the decision to purchase.

The system consists of the following components:
- One or more screen (which include(s) built-in or separate speakers) or television set(s), strategically placed in the commercial site so as to be in close proximity to the area where the actual product(s) is (are) displayed for sale, which screen(s) is (are) controlled by a remote computer unit (receiver) and project(s) a "script" with the message(s) as instructed by a central unit. The location of the screen(s) or TV set(s) is strategically important. The screen(s) or TV set(s) will be projecting message(s) for selected product(s) at the time the consumer is considering the purchase of the product(s) or a competing one. By properly locating the screen(s) or TV set(s), the consumer will be able to watch the promotional message(s) and see the actual product(s) almost simultaneously. This simultaneous contact brings forth all the benefits of the "live" presentation of the product, accomplished by the presence of a person on the site adjacent to the product, but without the weaknesses of the human interference, as previously discussed, in delivering the message.
- One or more printers, placed close to a screen or television set and projecting the available for printing material (coupons/leaflets), which issue them as selected by the consumer, by touching its facsimile on the screen or TV or a key on a board next to each printer. These coupons may include data which allows their easy administration, and may be available for printing and use by the consumer up to an established limit, i.e., in time or number, as established by the commercial site authorized personnel or by the authorized personnel of an advertising supplier.
- One or more remote computer units (receivers) which are equipped to communicate with a satellite site, over the wires or wirelessly with modems and which are equipped with hard disks, satellite card and video card. They are programmed, using a program written for the purpose, to:
   ○ Communicate with a satellite site in predetermined time frequencies or in the alternative, in the event modems are used, communicate at desired frequencies with the central computer;
   ○ To project thru the installed screens or TVs a "script", which includes the advertising messages, voice announcements, leaflets and coupons for printing and any other type of material which is in some form of sound or picture;
   ○ To cause the printer(s) to print, on demand, the discount coupons or leaflets through the installed printer;
   ○ To replace, eliminate or add new messages without the on going presentation on the screens or TVs being affected;
   ○ To record statistical information as programmed and transfer it to the central unit upon demand.

   These remote units-receivers are the controllers and administrators of the "script" which is received from the satellite site or by modem from the central unit, each time the remote unit is connected to the satellite by antenna or the central unit by modem. Their administration duties include the distribution of picture and sound to the screens or television sets installed for the purpose in the commercial sites, and at the instruction of the consumer, who will make a selection by touching on a screen the appropriate coupon or leaflet, cause the printer to print a coupon or leaflet for the consumer. These remote units-receivers turn on and off automatically by program, time controller or by remote control. A supplier of a product (manufacturer or merchant), the commercial site representatives (managers, etc.) or their advertising agencies create the advertising (promotional) messages which they wish the system to project in promoting the product at a commercial site. When they wish, at the same time or later on, to offer a discount or issue a written or voice message, they issue written instructions. The promotional message and written instructions for a printed, voice or other message to be played on the system are sent to the central office of the administrator of the system.
   When the promotional messages and / or instructions are received by the administrator, they are programmed into a "script". The new "script" thus created is then transmitted to the satellite site (or to the remote via a modem) which stores it. On the next visit by the remote unit(s)-receiver(s), to which the "script" is directed, to the satellite site, the remote unit updates its "script" with the new "script". These "scripts" can include advertising (promotional) messages, instructions for the issue of discount coupons or leaflets, voice announcements, graphics, and in general anything that requires sound or picture.
- The central unit computer is the computer used to convert all material into digital files, create the "script" of each remote, save all of the above on its hard disk and then deposit these on the satellite site for distribution to the remote locations. If modems are used, the central unit does the distribution or the "scripts" to the remotes.
   In the central offices where the central computer is located, advertising messages are processed from what ever form they are received, into digital files. The conversion is done by using programs and interface cards, available in the market or specifically designed for the purpose, and these converted files are stored in the central unit.
   The converted files take one of the following forms: .avi, .mjpeg, .jpeg or .mpeg or any other form which allows the storing, transferring and projecting of moving pictures and sound.
   Similarly, instructions for voice announcements are processed and digital files are prepared using artificial voice machines, while coupons and leaflets are programmed for printing creating digital files for each. Using a program such as the ADOBE Premiere or similar programs, as well as programs written specifically for the purpose, the digital files are structured in a specific order, in other words they are structured into a "script", much like the script of a movie. The structure of the digital files permits the change, elimination or addition of new files, without being necessary to change the rest of the files in a "script", thus making each "script" an autonomous file.
- A satellite based site, rented from one of the commercial satellite companies such as ASTRA, Hot bird, etc., serves as a storage facility of scripts, programs, statistics, material printing instructions, etc.. In the event modems are used, the central and each remote are also supplied with a modem and the satellite site and antennas are replaced by the central computer, where the same data is stored and its modem.

## Claims

1. A system of promoting selected products at the time and point of purchase by projecting advertising messages and issuing written material such as discount coupons in commercial sites using a satellite base, and satellite antennas (or in the alternative wire or wireless modem communications), computers, screens (with built in or autonomous speakers) or TV sets and printers which is **characterized by** the following:
• One or more screens or TV sets (with built in speakers or separate autonomous speakers), capable of multimedia presentations (moving picture and sound) strategically placed in commercial sites (stores, shopping centers, etc...) in different locations, so as to give the opportunity to the consumer at the time purchase is considered to link the product being promoted on the system's screen to the actual product on the shelf of the store.
• One or more screens or TV sets (with built in speakers or separate autonomous speakers), capable of multimedia presentations (moving picture and sound) strategically placed in commercial sites (stores, shopping centers, etc...), wired to the remote unit-receiver or operating wireless, which are controlled by the remote units-receivers and project the messages included in each "script" executed by the remote unit-receiver.
• One or more printers each placed near a screen dedicated to showing the material available for printing, which, upon the instruction from a consumer (who will select and then touch the material on the screen or a keypad) will print the authorized material.
• One or more remote units - receivers, which are computers equipped with satellite dishes (or modems), hard disks, video exit cards, satellite cards, screens or television sets (with built-in or separate speakers) and printer(s). The remote unit is programmed to cause periodic or even continuous connection via the satellite dish (antenna) with the site on the satellite storing the "scripts" (or via its modem connect to the central unit), and has stored programs and files in its hard disk and memory necessary to cause the remote system to operate. These files, are stored on the hard disk of the remote unit-receiver, result in:
○ Projecting the messages, voice announcements, etc., for selected products in accordance with the instructions programmed and the prepared "script" on the screen or TV that is adjacent to the product being promoted;
○ Causing material to be printed, when selected by the consumer;
○ Permitting the replacement, elimination or addition of new messages without affecting the continuous showing of the "script";
○ Collecting and saving local statistics;
The remote units-receivers are the controllers of the programs, "scripts", and other instructions that are received through their satellite dish from the satellite site (or modem from the central unit) and they are located in commercial sites (super markets, shopping centers, etc.). They distribute picture and sound to the local screens (TVs) and permit the printer to print the authorized coupons. These remote units-receivers operate independently and are programmed to turn on and off automatically, via a time control device or by remote.
• A computer, which is the central unit, administering the messages and which programs the "script" of each remote unit-receiver that is located in each commercial site and which transfers these to its hard disk and on to a satellite site for storage, and from which satellite site (or hard disk when modems are being used) the remote units-receivers affected by the changes are updated at frequent intervals. Using the central unit, advertising messages, announcements, etc., for selected products are converted into digital formats. This is accomplished by using cards readily available in the market which accept analogue files and convert them to digital or by programs written to suit the purpose. These are stored in the hard disk(s) of the central unit. These files take one of the following digital file forms: .avi, .mjpeg, .jpeg or .mpeg or other formats to be developed capable of storing, transferring and executing multimedia files.
Using a program such as ADOBE Premiere or a similar program, in conjunction with programs written for the purpose, the advertising messages, voice announcements, requests for material to be printed, etc., are placed in a "script" like format, much like the one used in making a movie. The methodology used to prepare the "script" with the digital files permits the change, elimination or addition of new files, without it being necessary to alter the rest of the files, resulting in creating autonomous files as well as saving storage space and time.
• .A satellite site capable of storing data and capable of being reached by specific computers equipped with satellite dishes (antennas) at random, able to receive and transmit data from and to authorized locations (remote units).

2. A system of promoting selected products by projecting messages and printing material in commercial sites at the time and point of purchase of the products, using computers with satellite disks and screens in accordance with Claim #1, whereby the authorized coupons include specific coding so that they can easily be segregated, counted and charged as intended and which are issued for a pre-determined quantity or time.

3. A method of promoting selected products by projecting advertising messages and printing material in commercial sites at the time and point of purchase of the products, utilizing a network of computers, satellite site, satellite dishes, screens and printers which is accomplished using the system referred to in Claims 1 and 2.

4. A system as described in Claims 1, 2 and 3 where all data required by the remote units-receivers is stored in the central unit and it is periodically transferred to the remotes by the use of wired modems through the normal telephone lines or a dedicated network.

5. A system as described in Claims 1, 2 and 3 where all data required by the remote units-receivers is stored in the central unit and it is periodically transferred to the remotes by the use of wireless modems.
